# EUROPEAN PATENT SPECIFICATION

(11) **EP 4 124 014 B1**
(45) Date of publication and mention of the grant of the patent: **05.11.2025**
(21) Application number: 21186730.4
(22) Date of filing: 20.07.2021
(51) Int. Cl.: H04N 23/698

(54) **DEVICES AND METHODS FOR WIDE FIELD OF VIEW IMAGE CAPTURE**
VORRICHTUNGEN UND VERFAHREN ZUR BILDERFASSUNG MIT WEITEM SICHTFELD
DISPOSITIFS ET PROCÉDÉS DE CAPTURE D'IMAGE À LARGE CHAMP DE VISION

(43) Date of publication of application: 25.01.2023
(73) Proprietor: Spiideo AB, 211 34 Malmö (SE)
(72) Inventor: Larsson, Carl, 237 36 Bjärred (SE); Olsson, Patrik, 239 32 Skanör (SE); Johansson, Örjan, 224 60 Lund (SE); Morän, Jonas, 211 34 Malmö (SE); Craven-Bartle, Thomas, 211 34 Malmö (SE)
(74) Representative: Ström & Gulliksson AB

(56) References cited:
- EP-A1- 3 018 632
- WO-A1-2015/030449
- US-A1- 2012 147 183

## Description

### Field

This disclosure relates to devices and methods for capturing images with a wide field of view. In particular, the disclosure relates to reflector devices and methods that enable the capture of images of a real-world target area.

### Background

In many situations, it is desired to capture images of real-world target areas with high aspect ratios, for example areas that are much wider than they are high, for remote viewing or analysis, either live or at a later time. For example, coaches or athletes may wish to capture video of a sports field during training or a match scenario to analyse and discuss athletic performance. To enable this, an image capture system, such as a camera system, needs a wide field of view (FOV) to capture the entire area, and a high resolution to capture images in sufficient detail.

Most cameras have a limited FOV, and so need to be moved a significant distance from such a target area in order to capture the entire desired field. However, the resolution of the captured image is limited by the resolution of the camera. Therefore, when the camera is placed at a significant distance from a real-world target area, smaller portions of the target area are captured at relatively low resolution. As such, the image quality of these portions is compromised.

Systems for capturing high-aspect ratio target areas at sufficiently high resolution have been proposed. For example, WO 2017/180050 discloses a system for capturing video of a sports field. The system uses one or more video cameras to capture a target field. At playback, virtual pan-tilt-zoom (PTZ) functionality is provided so that the viewers can choose themselves where to look within the captured area. This results in a virtual view that can be reoriented and zoomed, as if the scene had been captured by a real PTZ camera.

However, current systems have several drawbacks. Some such systems rely on using multiple cameras to capture the entire area at sufficient resolution, which require specific placement relative to each other and are not readily adaptable to areas of different size or shape. Other such systems require high-end camera systems, which include large, heavy-duty equipment that must be installed at a fixed location and require dedicated hardware for network operation.

WO 2015/030449 A1 discloses a dead zone image supplying apparatus and a panoramic image generating apparatus for generating a panoramic image by further supplying an image of a dead zone area outside of the viewing angle of a camera. The dead zone image supplying apparatus comprises a first reflection mirror that reflects an image of the dead zone area. The panoramic image generating apparatus comprises a first camera for photographing the image of dead zone area from the dead zone image supplying apparatus, and a control section for generating a panoramic image in a desired direction by processing and combining photographed images.

A solution is therefore required that addresses at least some of the above issues. In particular, it is desired to provide a solution that enables wide FOV image capture to be performed at sufficiently high resolution in a more convenient manner.

### Summary

The present disclosure attempts to solve the problems noted above by providing a reflector device that enables capture of wide FOV images using a single image capture device. The reflector system comprises a specific arrangement of reflectors that enables an entire real-world target area, such as a sports field, to be captured by a single image capture device.

According to an aspect, there is provided a reflector device for use in capturing an image of a real-world target area, the reflector device comprising a frame configured to retain an image capture device comprising at least one camera, a first reflector configured to receive light from a first subarea of the real-world target area, a second reflector configured to receive light from a second subarea of the real-world target area, and a third reflector, wherein the first reflector is configured to direct the light from the first subarea to the third reflector, the second reflector is configured to direct the light from the second subarea to the third reflector, the third reflector is configured to direct the light from the first and second subareas to a first camera of the image capture device such that the first camera is enabled to capture an image of the first and second subareas, the first, second and third reflectors are planar mirrors, and the image capture device is enabled to capture an image of a third subarea of the real-world target area.

Optionally, the first reflector is disposed at an angle (α) relative to the second reflector, wherein the angle (α) is optionally determined based on at least one of the focal length of the first camera, the lens distortion of the first camera, the position and/or orientation of the first camera relative to the target area, and/or the dimensions of the target area. Optionally, the third reflector is disposed perpendicular to a plane bisecting the angle (α) between the first and second reflectors.

Optionally, the first and second reflectors are disposed at an angle (β) relative to a planar field of view of the first camera, wherein the angle (β) is optionally determined based on at least one of the focal length of the first camera, the lens distortion of the first camera, the position and/or orientation of the first camera relative to the target area, and/or the dimensions of the target area.

Optionally, the third reflector is disposed at an angle (θ) relative to a planar field of view of the first camera, wherein the angle (θ) is optionally determined based on at least one of the focal length of the first camera, the lens distortion of the first camera, the position and/or orientation of the first camera relative to the target area, and/or the dimensions of the target area.

Optionally, the image capture device is enabled to capture the image of a third subarea of the real-world target area directly. Optionally, the first, second and third subareas make up substantially the entire real-world target area. Optionally, the first and second subareas represent respective peripheral areas of the real-world target area and the third subarea represents a central area of the real-world target area.

Optionally, the reflector device is further configured to enable the first camera of the image capture device to capture the image of the third subarea of the real-world target area. Optionally, the reflector device is further configured to enable a second camera of the image capture device to capture the image of the third subarea of the real-world target area.

Optionally, the images captured by the image capture device are reconstructable to provide an image of the target area having a resolution of at least 7680 x 2160 pixels. Optionally, the image capture device is configured to capture video and the reflector device is for use in capturing a video of the real-world target area. Optionally, the image capture device is a mobile device, such as a smartphone or tablet.

According to another aspect, there is provided a reflector device for use in capturing an image of a real-world target area, the reflector device comprising a frame configured to retain an image capture device comprising at least one camera, a first reflector configured to receive light from a first subarea of the real-world target area, a second reflector configured to receive light from a second subarea of the real-world target area, and a third reflector, wherein the first reflector is configured to direct the light from the first subarea to the third reflector, the second reflector is configured to direct the light from the second subarea to the third reflector, and the third reflector is configured to direct the light from the first and second subareas to the at least one camera of the image capture device such that the camera is enabled to capture an image of the first and second subareas, wherein the first, second and third reflectors are planar mirrors.

According to another aspect, there is provided a system for capturing an image of a real-world target area, the system comprising a reflector device, and an image capture device comprising at least one camera. Optionally, the image capture device is communicatively coupled to a data network. Optionally, the system further comprises a server device configured to receive raw image data from the image capture device. Optionally, the image capture device is configured to transmit raw image data to the server device. Optionally, the image capture device is configured to transmit its position and/or orientation relative to the real-world target area to the server device.

According to another aspect, there is provided a method for capturing an image of a real-world target area, the method comprising at a first reflector, directing light from a first subarea of the real-world target area to a third reflector, at a second reflector, directing light from a second subarea of the real-world target area to the third reflector, at the third reflector, directing the light from the first and second subareas to a first camera of an image capture device, at the image capture device, capturing an image of the first and second subareas and capturing an image of a third subarea of the real-world target area, wherein the first, second and third reflectors are planar mirrors.

Optionally, the method further comprises, at the image capture device, capturing the image of the third subarea of the real-world target area directly. Optionally, the first, second and third subareas make up substantially the entire real-world target area. Optionally, the first and second subareas represent respective peripheral areas of the real-world target area and the third subarea represents a central area of the real-world target area.

Optionally, capturing the images of the first, second and third subareas is performed at a first camera of the image capture device. Optionally, capturing the image of the first and second subareas is performed at a first camera of the image capture device, and capturing the image of the third subarea is performed at a second camera of the image capture device. Optionally, the images captured by the image capture device are reconstructable to provide an image of the target area having a resolution of at least 7680 x 2160 pixels. Optionally, the method further comprises transmitting raw image data from the image capture device to a server device via a data network.

Recent developments in camera technology have brought the image quality of certain portable devices, such as smartphones, to a level where they may be used in this application. The reflector devices disclosed herein extend the functionality of such devices, such that users can capture wide FOV target areas at sufficiently high resolution without the need for multiple or high-end devices. Furthermore, the connectivity of modern portable devices means that captured video may be transmitted for storage, for example in the cloud, without the need for separate hardware.

It should be emphasized that the term "comprises/comprising" when used in this specification is taken to specify the presence of stated features, integers, steps, or components, but does not preclude the presence or addition of one or more other features, integers, steps, components, or groups thereof. All terms used in the claims are to be interpreted according to their ordinary meaning in the technical field, unless explicitly defined otherwise herein. All references to "a/an/the element, device, component, means, step, etc." are to be interpreted openly as referring to at least one instance of the element, device, component, means, step, etc., unless explicitly stated otherwise. The steps of any method disclosed herein do not have to be performed in the exact order disclosed, unless explicitly stated.

### Brief Description of the Drawings

Exemplary embodiments of the disclosure shall now be described with reference to the drawings in which:
FIG. 1a illustrates a real-world target area of which it is desired to capture one or more images;
FIG. 1b illustrates an example of a standard image capture device being used to capture the target area;
FIG. 1c illustrates another example of a standard image capture device being used to capture the target area;
FIG. 2 illustrates an example target area divided into three subareas;
FIG. 3a shows a reflector device for use in capturing an image of a real-world target area, according to a first embodiment;
FIG. 3b shows a side view of the reflector device shown in Fig. 3a;
FIG. 4a shows the resultant FOV of an image capture device using the reflector device of the first embodiment;
FIG. 4b shows an image reconstructed from the FOV shown in Fig. 4a;
FIG. 5a shows a reflector device for use in capturing an image of a real-world target area, according to a second embodiment;
FIG. 5b shows a side view of the reflector device shown in Fig. 5a;
FIG. 6a shows the resultant FOV of an image capture device using the reflector device of the second embodiment;
FIG. 6b shows an image reconstructed from the FOV shown in Fig. 6a;
FIG. 7 illustrates an example target area divided into two subareas;
FIG. 8a shows a reflector device for use in capturing an image of a real-world target area, according to a third embodiment;
FIG. 8b shows a side view of the reflector device shown in Fig. 8a;
FIG. 9 shows the resultant FOV of an image capture device using the reflector device of the third embodiment;
FIG. 10 schematically shows a system for capturing an image of a real-world target area; and
FIG. 11 is a flow chart illustrating a method for capturing an image of a real-world target area.

Throughout the description and the drawings, like reference numerals refer to like parts.

### Description

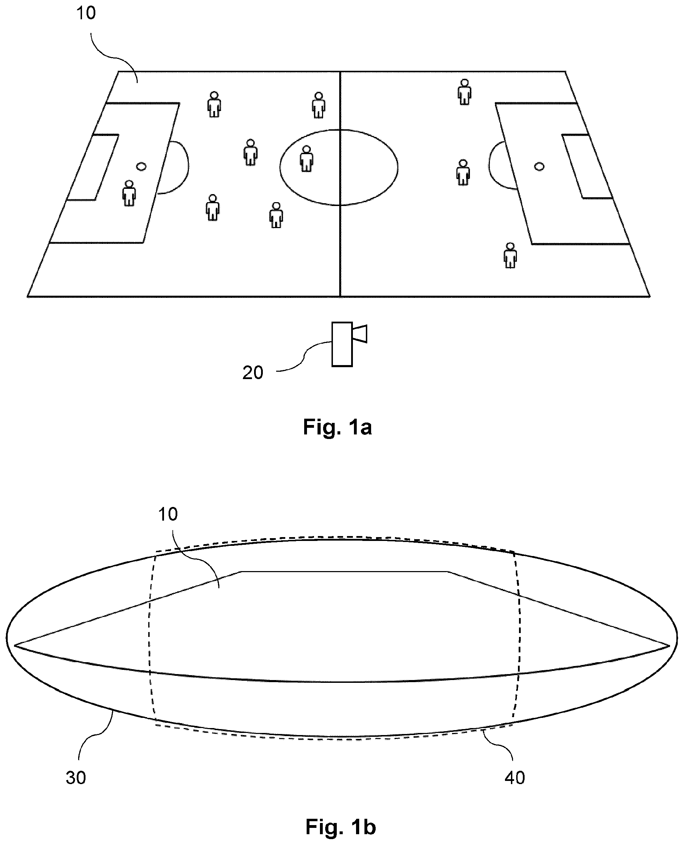

Fig. 1a illustrates a real-world target area 10 of which it is desired to capture one or more images. The target area 10 may be, for example, a sports field, and in the example of Fig.1a is a soccer field. In many situations, it is desired to capture images of such areas for remote viewing or analysis. For example, coaches or athletes may wish to capture video of a sports field during training or a match scenario to analyse and discuss athletic performance. Whilst the present disclosure relates specifically to sports fields, it will be appreciated that the disclosed devices methods and systems are applicable to any real world target area having a relatively high aspect ratio.

As shown in Fig. 1a, an image capture device 20 may be positioned in the vicinity of the target area 10 in order to capture one or more images of the target area 10. The image capture device 20 may be configured to capture still and/or video images. The image capture device 20 may comprise one or more cameras for capturing images. For example, the image capture device 20 may comprise a high-resolution camera, a digital camera, a network video camera or the like.

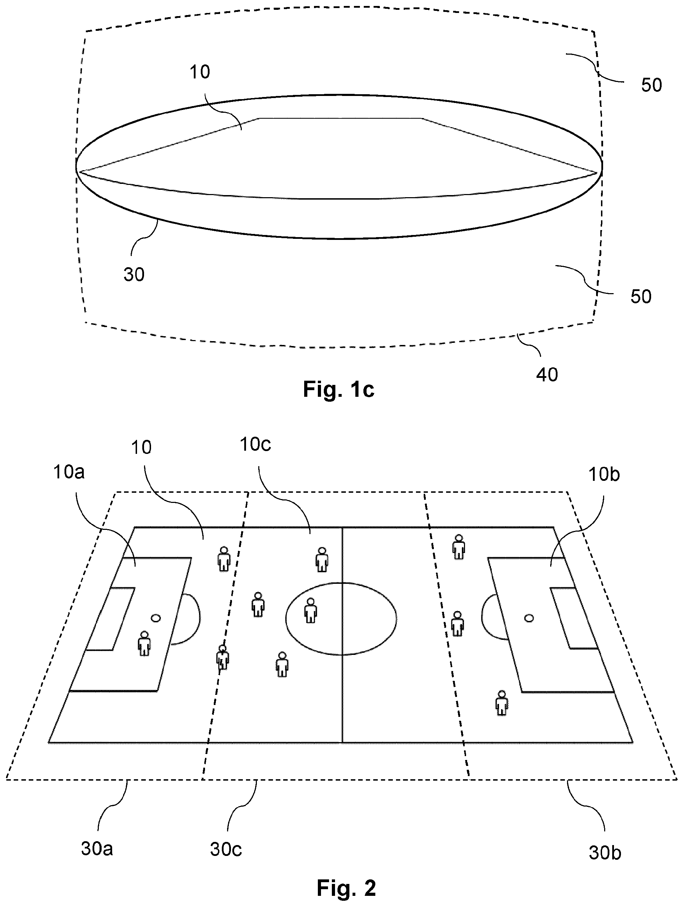

A limitation of existing systems for image capture of such areas is that the FOV of existing cameras tends to be limited, and the entire area cannot be captured at sufficient resolution. Fig. 1b illustrates one example of a standard camera being used to capture the target area 10. A desired FOV 30 is defined around the target area 10. The desired FOV 30 represents the area that encompasses the target area 10 and its nearest surroundings. A camera FOV 40 is shown in dashed lines, for the case that the image capture device 20 is relatively near the target area 10. The camera FOV 40 overlaps the desired FOV 30, but is not sufficiently dimensioned to capture the entire desired FOV 30. To remedy this, the image capture device 20 can be moved further away from the target area 10, as shown in Fig. 1c.

Fig. 1c illustrates the case in which the image capture device 20 has been moved a sufficient distance away from the target area 10 in order that the entire desired FOV 30 is within the FOV 40 of the image capture device 20. However, as shown in Fig. 1c, there are large areas of waste 50 in the FOV 40, above and below the desired FOV 30. This means that the camera FOV 40 is not being used efficiently to capture images of the target area 10. Furthermore, the target area 10 is captured at a relatively low resolution due to the distance of the image capture device 20 from the target area 10. This resolution may be insufficient for the remote viewing or detailed analysis that is desired. For example, if it desired to zoom in to a particular region of the target area 10, the resolution of the captured image will not be sufficient to show that region in detail.

In order to address the issues discussed above, reflector devices are proposed that enable a single image capture device to capture images of an entire target area at sufficient resolution smaller areas of the target area to be viewed at sufficient quality. The disclosed reflector devices achieve this by treating the target area as a plurality of subareas and capturing images of each of these subareas.

FIG. 2 illustrates an example where a target area 10 is divided into three subareas 10a-c. Each subarea has a corresponding desired FOV 30a-c, shown in dashed lines. A first desired FOV 30a encompasses the first subarea 10a, which is one end portion of the target area 10. A second desired FOV 30b encompasses the second subarea 10b, which is the other end portion of the target area 10. A third desired FOV 30c encompasses the third subarea 10c, which is a central portion of the target area 10. The three subareas 10a-c make up the entire target area 10. It will be appreciated that a larger number of subareas and corresponding mirrors could be used in some implementations.

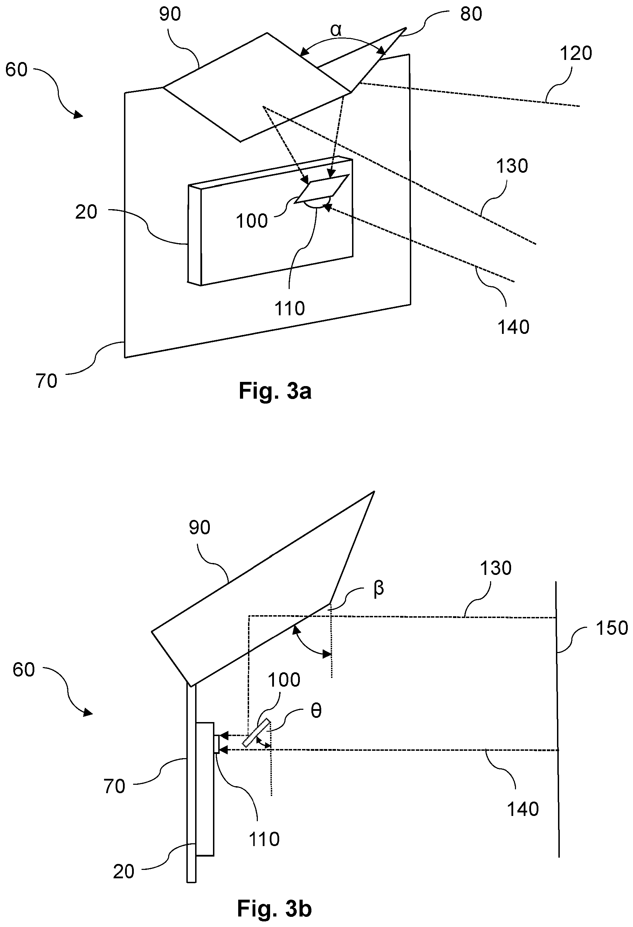

A first reflector device 60 that enables an image capture device 20 to capture the three subareas 10a-c is shown in Figs. 3a and 3b. Fig 3b shows a side view of the reflector device 60 shown in Fig. 3a. The reflector device 60 comprises a frame 70, a first reflector 80, a second reflector 90 and a third reflector 100. An image capture device 20 is shown assembled in the reflector device 60. In this case, the image capture device 20 comprises a single camera 110. In some embodiments, the image capture device 20 is a mobile device having camera functionality, such as a smartphone or tablet.

The frame 70 is configured to retain the image capture device 20 in a position relative to the reflectors 80, 90, 100. This ensures that the reflectors 80, 90, 100 can direct light to the camera 110 of the image capture device 20 in the correct way, as will be explained below. The frame 70 may be constructed from any suitable material, for example metal, plastic, wood, etc. In some embodiments, aluminium may be used. In one embodiment, the reflectors 80, 90, 100 are planar mirrors.

The first reflector 80 and the second reflector 90 are arranged at an angle α to each other. That is to say, the reflective plane of the first reflector 80 is disposed at an angle to the reflective plane of the second reflector 90. This enables the first reflector 80 and the second reflector 90 to receive light from different areas. The first reflector 80 can be configured to receive light 120 from the first subarea 10a of the real-world target area 10, and direct this light 120 to the third reflector 100. The second reflector 90 can be configured to receive light 130 from the second subarea 10b of the real-world target area 10, and direct this light 130 to the third reflector 100.

In order to capture the subareas 10a, 10b sufficiently, the first and second reflectors 80, 90 can be disposed at an angle β relative to a planar field of view 150 of the camera 110. That is to say, the first and second reflectors 80, 90 may be tilted relative to a viewing direction of the camera 110 (at an angle of 90°-β).

The third reflector 100 is configured to direct the light 120, 130 from the first and second subareas 10a, 10b to the camera 110 of the image capture device 20. In this way, the camera 110 is enabled to capture images of the first and second subareas 10a, 10b. To achieve this, the third reflector 100 may be disposed at an angle θ relative to a planar field of view of the camera 110. That is to say, the reflective plane of the third reflector 100 may be tilted relative to a viewing direction of the camera 110 (at an angle of 90°-θ).

The third reflector 100 may be disposed in a position that allows an equal amount of light 120, 130 from the first and second subareas to be received by and reflected from the third reflector 100. To achieve this, the third reflector 100 may be disposed perpendicular to a plane bisecting the angle α between the first and second reflectors 80, 90. The third reflector 100 may also be disposed at a position such that it is bisected by the plane bisecting the angle α between the first and second reflectors 80, 90.

The angles α, β and θ discussed above are determined based on parameters of the camera 110 and the target area 10. For example, the focal length of the camera 110, the lens distortion of the camera 110, the desired position and/or orientation of the camera 110 relative to the target area 10, and/or the dimensions of the target area 10 can be used to determine the angles of the reflectors 80, 90, 100. The dimensions of the target area 10 together with the position and/or orientation of the camera 110 relative to the target area 10 can be used to determine an angular FOV requirement that can be taken into account during determination of the angles α, β and θ. The angles should be selected to ensure that the body of the image capture device 20 and the frame 70 do not interfere with the light paths 120, 130. The methods used in the calculation of these angles are based on the law of reflectance and would be known to a person skilled in the art. In some embodiments, an optimisation process may be used to determine the final angles.

The reflector device 60 is also configured to enable the image capture device 20 to capture an image of the third subarea 10c of the real-world target area. In this embodiment, the third reflector 100 is disposed at a position such that light 140 from the third subarea 10c can be received by the camera 110. Specifically, the third reflector 100 is disposed to only partially obscure the FOV of the camera 110, such that light 140 from the normal FOV of the camera 110 is received along with light 120, 130 reflected from the third reflector 110. In some embodiments, a second camera may also be used to capture the third subarea 10c. The light 140 may arrive directly at the camera 110, or via some other reflector arrangement.

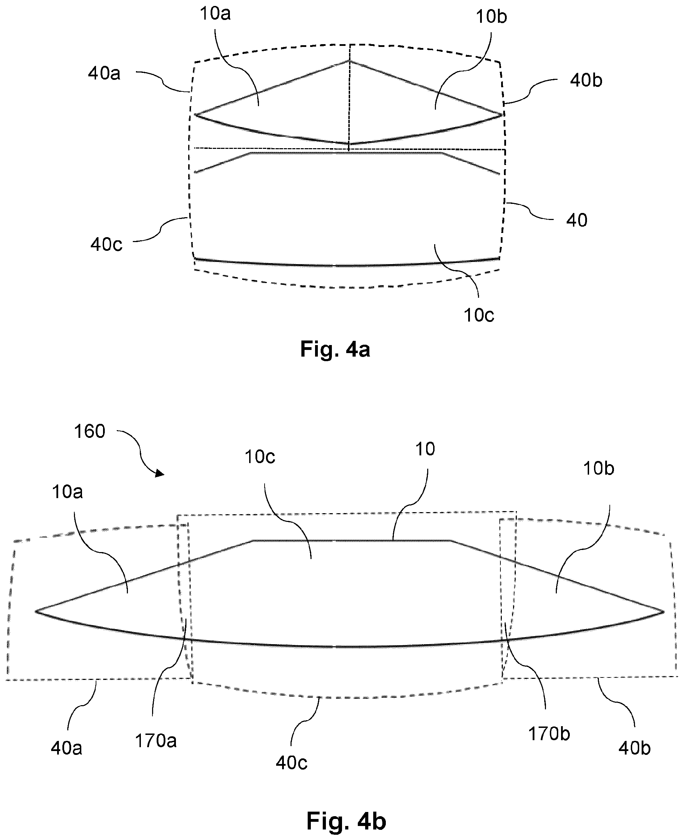

The image capture device 20 is therefore enabled to capture images of the first, second and third subareas 10a-c. The images may be still and/or video images. The resultant FOV 40 of the camera 110 is shown in Fig. 4a. As can be seen, the first subarea 10a is present in an upper-left portion 40a of the FOV 40, the second subarea 10b is present in an upper-right portion 40b of the FOV 40, and the third subarea 10c is present in a lower portion 40c of the FOV 40. This means that the entire target area 10 is captured by the image capture device 20 without having to move the image capture device 20 to a position distant from the target field or compromising the resolution of the image. Furthermore, the image capture device 20 may be a mobile device having camera functionality, such as a smartphone or tablet. This enables image capture of the entire target area 10 to be performed in a portable manner, which is more convenient than using heavy-duty equipment that must be installed at a fixed location. Instead, the reflector device 60 and image capture device 20 may be moved between different target areas 10 having the same dimensions, which may be useful in implementations such as sports training complexes, which have a number of different fields. Furthermore, such mobile devices can be communicatively coupled to a data network, which allows raw image data to be transmitted via the data network without the need for extra hardware.

The FOV 40 can then be reconstructed using techniques known in the art in order to provide an image of the entire target area 10. The reconstruction may be performed based on parameters such as the angles of the reflectors 80, 90, 100, the focal length of the camera 110, lens distortion of the camera 110, and the position and/or orientation of the image capture device 20 relative to the target area 10. In some embodiments, the image capture device 20 is configured to transmit its position and/or orientation relative to the target area 10 via a data network.

This reconstruction of the FOV 40 from Fig. 4a is shown in Fig. 4b. In some embodiments, it may be desired that the resolution of the resulting image is at least 7680 x 2160 pixels. The camera 110 may therefore have a suitable image capture resolution to achieve this. For example, the camera 110 may have a resolution of 3840 x 4320 pixels. An image 160 is provided that shows the target area 10 correctly, at a sufficient resolution and with little waste area. The image 160 can be manipulated, such as using PTZ functionality, such that smaller portions and specific details can be viewed. As the resolution of the image has not been compromised by moving the image capture device 20 too far from the target field 10, these specific details will be clearly visible to a viewer.

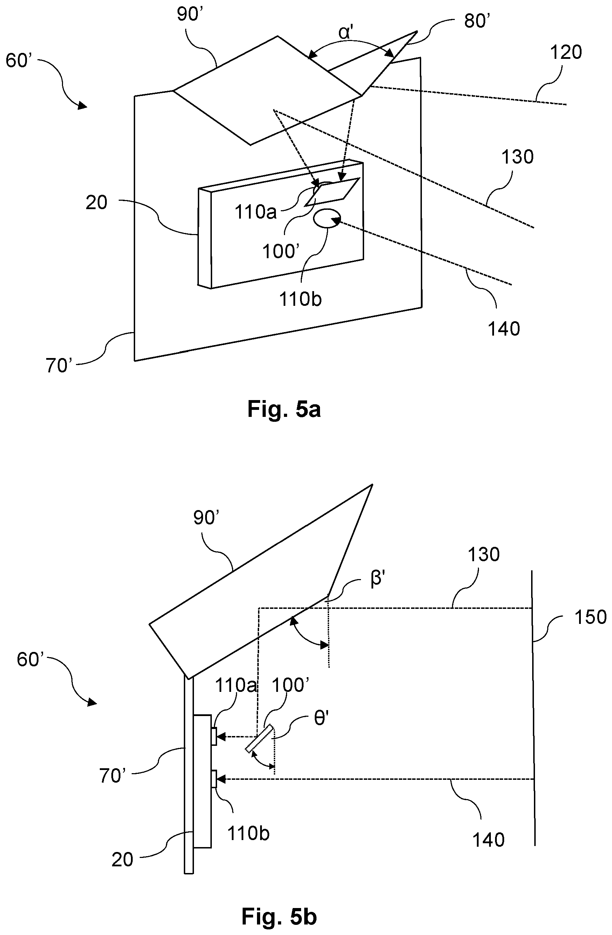

The reflector device 60 may be configured such that there is some overlap between the portions 40a-c of the FOV 40. This ensures that the entire target area 10 is captured without missing any information. In these overlap areas 170a, 170b, the images can be stitched together using techniques known in the art to provide the final reconstruction. Figs. 5a and 5b show a second reflector device 60' that enables an image capture device 20 to capture the three subareas 10a-c. Fig 5b shows a side view of the reflector device 60 shown in Fig. 5a. Similar to the reflector device 60 of the first embodiment, the reflector device 60' comprises a frame 70', a first reflector 80', a second reflector 90' and a third reflector 100'. An image capture device 20 is shown assembled in the reflector device 60'. In this case, the image capture device 20 comprises two cameras 110a, 110b. The image capture device 20 may a mobile device having camera functionality, such as a smartphone or tablet.

The frame 70' is configured to retain the image capture device 20 in a position relative to the reflectors 80', 90', 100' such that the reflectors 80', 90', 100' can direct light to the first camera 110a of the image capture device 20 in the correct way. The frame 70' may be constructed from any suitable material as discussed above, for example aluminium. In one embodiment, the reflectors 80', 90', 100' are planar mirrors.

Similar to the first and second reflectors 80, 90 of the first embodiment, the first reflector 80' and the second reflector 90' are arranged at an angle α' to each other. The first reflector 80' can be configured to receive light 120 from the first subarea 10a of the real-world target area 10, and direct this light 120 to the third reflector 100'. The second reflector 90' can be configured to receive light 130 from the second subarea 10b of the real-world target area 10, and direct this light 130 to the third reflector 100'. In order to capture the target subareas 10a, 10b sufficiently, the first and second reflectors 80', 90' can be disposed at an angle β' relative to a planar field of view 150 of the first camera 110a.

Similar to the third reflector 100 of the first embodiment, the third reflector 100' is configured to direct the light 120, 130 from the first and second subareas 10a, 10b to a camera of the image capture device 20. In this embodiment, the third reflector 100' is configured to direct the light 120, 130 to the first camera 110a of the image capture device 20. In this way, the first camera 110a is enabled to capture images of the first and second subareas 10a, 10b. Similar to the third reflector 100 of the first embodiment, the third reflector 100' may be disposed at an angle θ' relative to a planar field of view of the first camera 110a, and may be disposed in a position that allows an equal amount of light 120, 130 from the first and second subareas to be reflected from the third reflector 100'.

Similar to the reflector device 60 of the first embodiment, the angles α', β' and θ' discussed above are determined based on parameters of the first camera 110a and the target area 10. For example, the focal length of the first camera 110a, the lens distortion of the first camera 110a, the position and/or orientation of the first camera 110a relative to the target area 10, and/or the dimensions of the target area 10 can be used to determine the angles of the reflectors 80', 90', 100'. The dimensions of the target area 10 together with the position and/or orientation of the first camera 110a relative to the target area 10 can be used to determine an angular FOV requirement that can be taken into account during determination of the angles α, β and θ. The angles should be selected to ensure that the body of the image capture device 20 and the frame 70' do not interfere with the light paths 120, 130. In this embodiment, the angles should also be selected to ensure that the reflector 100' does not obscure the FOV of the second camera 110b. The methods used in the calculation of these angles are based on the law of reflectance and would be known to a person skilled in the art. In some embodiments, an optimisation process may be used to determine the final angles.

As with the reflector device 60 of the first embodiment, the reflector device 60' is also configured to enable the image capture device 20 to capture an image of the third subarea 10c of the real-world target area. In this embodiment, the third reflector 100 is disposed at a position such that light 140 from the third subarea 10c can be received by the second camera 110b of the image capture device 20. Specifically, the third reflector 100' is disposed not to obscure the FOV of the second camera 110b, such that the second camera 110b can receive light 140 from its normal FOV. The light 140 may arrive directly at the second camera 110b, or via some other reflector arrangement.

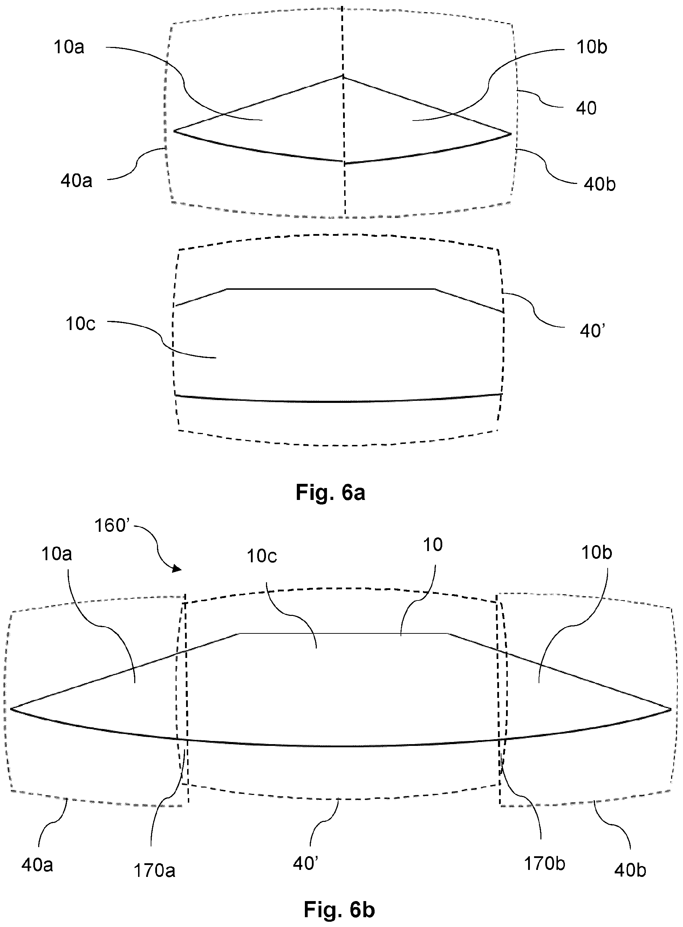

The image capture device 20 is therefore enabled to capture images of the first, second and third subareas 10a-c. The images may be still and/or video images. The resultant FOV 40, 40' of the respective cameras 110a, 110b is shown in Fig. 6a. As can be seen, the first subarea 10a is present in a left-hand portion 40a of the FOV 40 of the first camera 110a, and the second subarea 10b is present in a right-hand portion 40b of the FOV 40 of the first camera 110a. The third subarea 10c is present in the FOV 40' of the second camera 110b. This means that the entire target area 10 is captured by the image capture device 20 without having to move the image capture device 20 to a position distant from the target field, and compromising the resolution of the images. Furthermore, relative to the embodiment of Fig. 4a, the use of two cameras 110a, 110b and associated FOVs 40, 40' means that the target area can be captured in higher resolution. Furthermore, the image capture device 20 may be a mobile device having camera functionality, such as a smartphone or tablet. This enables image capture of the entire target area 10 to be performed in a portable manner, which is more convenient than using heavy-duty equipment that must be installed at a fixed location. Instead, the reflector device 60' and image capture device 20 may be moved between different target areas 10 having the same dimensions, which may be useful in implementations such as sports training complexes, which have a number of different fields. Furthermore, such mobile devices can be communicatively coupled to a data network, which allows raw image data to be transmitted via the data network without the need for extra hardware.

The FOVs 40, 40' can then be reconstructed using techniques known in the art in order to provide an image of the entire target area 10. The reconstruction may be performed based on parameters such as the angles of the reflectors 80', 90', 100', the focal length of the cameras 110a, 110b, lens distortion of the cameras 110a, 110b, and the position and/or orientation of the image capture device 20 relative to the target area 10. In some embodiments, the image capture device 20 is configured to transmit its position and/or orientation relative to the target area 10 via a data network.

This reconstruction of the FOVs 40, 40' from Fig. 6a is shown in Fig. 6b. Again, it may be desired that the resolution of the resulting image is at least 7680 x 2160 pixels. As two cameras 110a, 110b are used, each camera may have a resolution of at least 3840 x 2160 pixels, meaning lower-resolution cameras can be used than in the first embodiment. An image 160' is provided that shows the target area 10 correctly, at a sufficient resolution and with little waste area. The image 160' can be manipulated, such as using PTZ functionality, such that specific details can be viewed. As the resolution of the image has not been compromised by moving the image capture device 20 too far from the target field 10, these specific details can be clearly visible to a viewer.

The reflector device 60' may be configured such that there is some overlap between the FOVs 40, 40'. This ensures that the entire target area 10 is captured without missing any information. In these overlap areas 170a, 170b, the images can be stitched together using techniques known in the art to provide the final reconstruction.

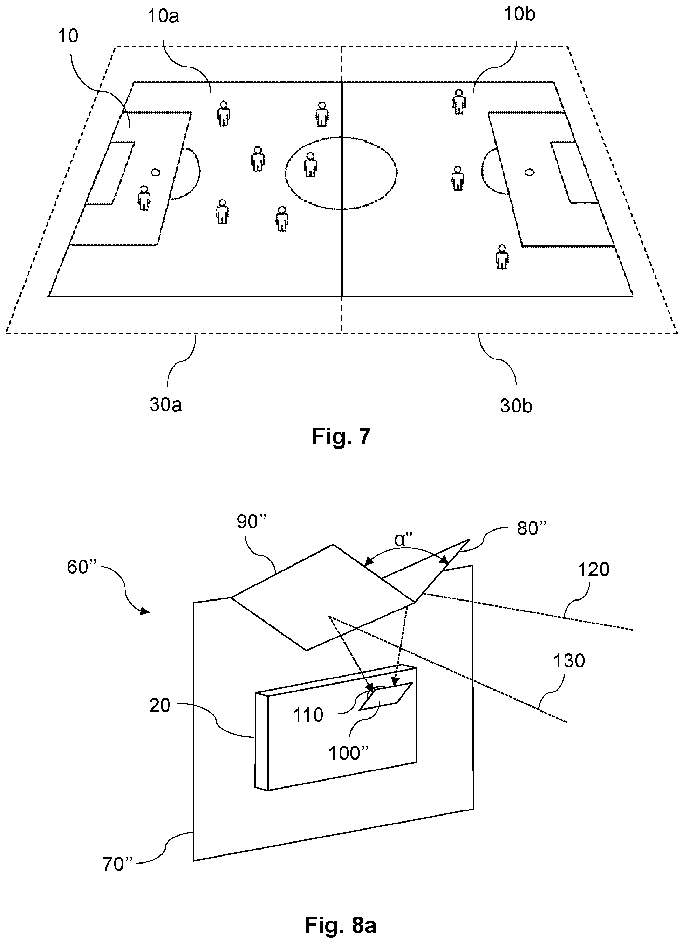

Fig. 7 illustrates an example where a target area 10 is divided into two subareas 10a-b. Each subarea has a corresponding desired FOV 30a, 30b, shown in dashed lines. A first desired FOV 30a encompasses the first subarea 10a, which is one half of the target area 10. A second desired FOV 30b encompasses the second subarea 10b, which is the other half of the target area 10. The two subareas 10a, 10b make up the entire target area 10.

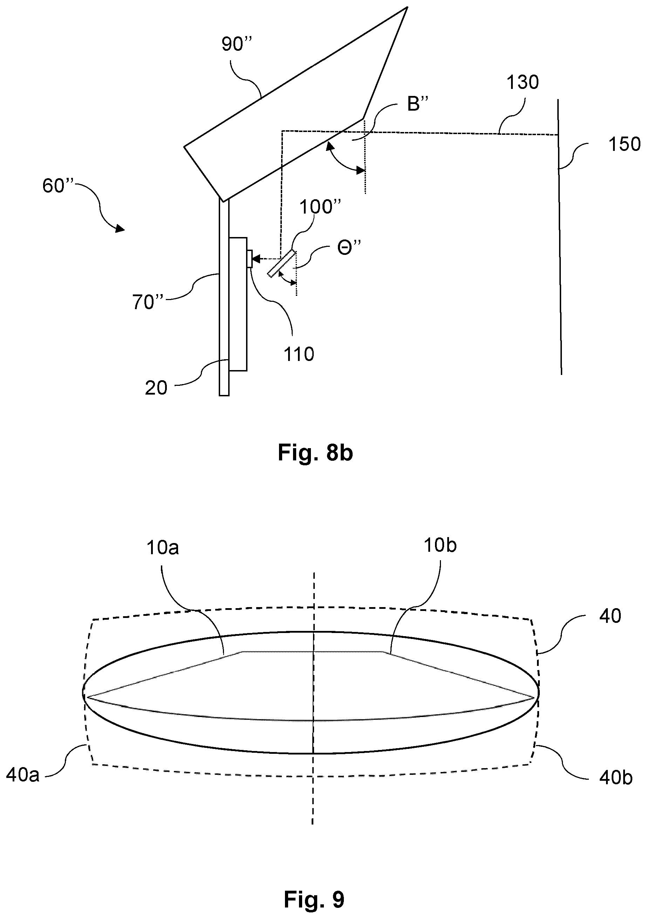

Figs. 8a and 8b show a third reflector device 60" that enables an image capture device 20 to capture the two subareas 10a, 10b. Fig 8b shows a side view of the reflector device 60" shown in Fig. 8a. Similar to the reflector device 60 of the first two embodiments, the reflector device 60" comprises a frame 70", a first reflector 80", a second reflector 90" and a third reflector 100". An image capture device 20 is shown assembled in the reflector device 60". In this case, the image capture device 20 comprises a single camera 110. The image capture device 20 may a mobile device having camera functionality, such as a smartphone or tablet.

The frame 70" is configured to retain the image capture device 20 in a position relative to the reflectors 80", 90", 100" such that the reflectors 80", 90", 100" can direct light to the camera 110 of the image capture device 20 in the correct way. The frame 70" may be constructed from any suitable material as discussed above, for example aluminium. In one embodiment, the reflectors 80", 90", 100" are planar mirrors.

Similar to the first and second embodiments, the first reflector 80" and the second reflector 90" are arranged at an angle α" to each other. The first reflector 80" can be configured to receive light 120 from the first subarea 10a of the real-world target area 10, and direct this light 120 to the third reflector 100". The second reflector 90" can be configured to receive light 130 from the second subarea 10b of the real-world target area 10, and direct this light 130 to the third reflector 100". In order to capture the target subareas 10a, 10b sufficiently, the first and second reflectors 80", 90" can be disposed at an angle β' relative to a planar field of view 150 of the camera 110.

The third reflector 100" is configured to direct the light 120, 130 from the first and second subareas 10a, 10b to the camera 110 of the image capture device 20. In this way, the camera 110 is enabled to capture images of the first and second subareas 10a, 10b. The third reflector 100" may be disposed at an angle θ" relative to a planar field of view of the camera 110, and may be disposed in a position that allows an equal amount of light 120, 130 from the first and second subareas to be reflected from the third reflector 100".

Similar to the first and second embodiments, the angles α", β" and θ" discussed above are determined based on parameters of the camera 110 and the target area 10. For example, the focal length of the camera 110, the lens distortion of the camera 110, the position and/or orientation of the camera 110 relative to the target area 10, and/or the dimensions of the target area 10 can be used to determine the angles of the reflectors 80", 90", 100". The dimensions of the target area 10 together with the position and/or orientation of the camera 110 relative to the target area 10 can be used to determine an angular FOV requirement that can be taken into account during determination of the angles α, β and θ. The angles should be selected to ensure that the body of the image capture device 20 and the frame 70" do not interfere with the light paths 120, 130. The methods used in the calculation of these angles are based on the law of reflectance and would be known to a person skilled in the art. In some embodiments, an optimisation process may be used to determine the final angles.

The image capture device 20 is therefore enabled to capture images of the first and second subareas 10a, 10b. The images may be still and/or video images. The resultant FOV 40 of the camera 110 is shown in Fig. 9. As can be seen, the first subarea 10a is present in a left-hand portion 40a of the FOV 40 of the camera 110, and the second subarea 10b is present in a right-hand portion 40b of the FOV 40 of the camera 110. This means that the entire target area 10 is captured by the image capture device 20 at a sufficient resolution and with little waste area. The image capture device 20 may be a mobile device having camera functionality, such as a smartphone or tablet. This enables image capture of the entire target area 10 to be performed in a portable manner, which is more convenient than using heavy-duty equipment that must be installed at a fixed location. Instead, the reflector device 60" and image capture device 20 may be moved between different target areas 10 having the same dimensions, which may be useful in implementations such as sports training complexes, which have a number of different fields. Furthermore, such mobile devices can be communicatively coupled to a data network, which allows raw image data to be transmitted via the data network without the need for extra hardware.

The FOV 40 can then be reconstructed as necessary using techniques known in the art in order to provide an image of the entire target area 10. The reconstruction may be performed based on parameters such as the angles of the reflectors 80", 90", 100", the focal length of the camera 110, lens distortion of the camera 110, and the position and/or orientation of the image capture device 20 relative to the target area 10. In some embodiments, the image capture device 20 is configured to transmit its position and/or orientation relative to the target area 10 via a data network. Again, it may be desired that the resolution of the resulting image is at least 7680 x 2160 pixels. The camera 110 may therefore have a suitable image capture resolution to achieve this. As such, the camera 110 may have a resolution of 7680 x 2160 pixels. The resultant image can be manipulated, such as using PTZ functionality, such that specific details can be viewed.

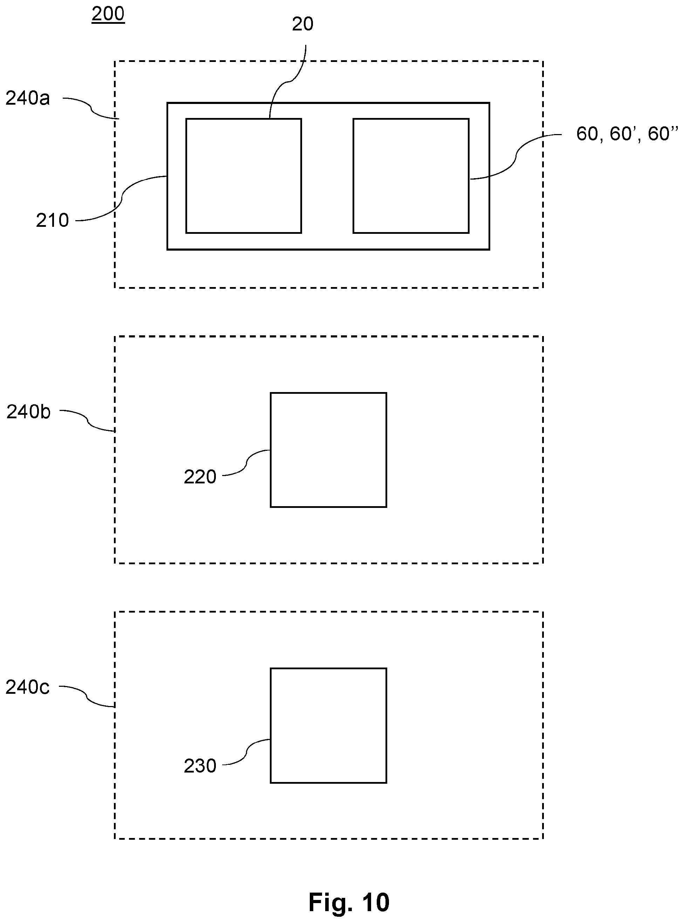

Fig. 10 schematically shows a system 200 for capturing an image of a real-world target area 10. The system comprises an image capture unit 210 comprising an image capture device 20 and a reflector device 60, 60', 60". Optionally, the system comprises a server device 220 and a user terminal 230.

At a first location 240a, an image capture unit 210 is disposed in the vicinity of a target area 10. The image capture unit 210 comprises an image capture device 20 and a reflector device 60, 60', 60". As discussed above, the reflector device 60, 60', 60" enables the image capture device 20 to capture images of the target area 10.

Before capturing images of the target area 10, the image capture unit 210 may be calibrated. The calibration can be done locally at the first location 240a by a user using an appropriate tool, such as a laptop computer, a mobile terminal or a tablet computer. Alternatively or additionally, the calibration can be done centrally, e.g. at the server device 220. In such a case, the server device 220 may comprise a backend camera calibration unit configured automatically detect known features of the target area 10 in images from the image capture device 20, such as for instance the border lines, penalty areas, centre line and centre circle of the target area 10. Alternatively, these features may be manually marked by a backend operator.

At a second location 240b, the server device 220 is configured to receive raw image data from the image capture device 20. The second location 240b may be remote from the first location 240a, or may be the same location. The server device 220 may provide backend functionality for the system, for example performing the reconstruction and stitching of raw image data into viewable images such as images 160, 160'. Additionally or alternatively, the server device 220 may comprise a memory unit for storing raw image data received from the image capture device 20 for later access. In some embodiments, the image capture device 20 at the first location 240a may be configured to perform the reconstruction and stitching of raw image data into viewable images.

The image capture device 20 is communicatively coupled to the server device 220. This may be achieved using a wired or wireless connection. In one embodiment, the image capture device 20 is communicatively coupled to a data network, for example the internet. The image capture device 20 is configured to transmit raw image data to the server device 220, for example via the data network. The image capture device 20 may also transmit its position and/or orientation relative to the real-world target area 10 to the server device 220, for example via the data network. This information can be used in the reconstruction of the raw image data into viewable images.

At a third location 240c, a user terminal 230 allows a user to interact with the viewable images produced at the server device 220. The third location 240c may be remote from the first location 240a, or may be the same location. The user terminal 230 is communicatively coupled to the server device 220 in order to receive the viewable images from the server device 220. This may be achieved using a wired or wireless connection. In one embodiment, the user terminal 230 is communicatively coupled to a data network, for example the internet.

The user terminal 230 allows a user to view or playback images of the target area 10. At playback, virtual pan-tilt-zoom (PTZ) functionality is provided so that the viewers can choose themselves where to look within the captured target area 10. This results in a virtual view that can be reoriented and zoomed, as if the scene had been captured by a real PTZ camera.

The user terminal 230 may be a desktop computer, a laptop computer or a mobile device such as a smartphone or tablet. In some embodiments, the user terminal 230 may be integrated with the image capture device 20. For example, the image capture device 20 may be a mobile device, and a user may be enabled to interact with the viewable images using the screen of the mobile device.

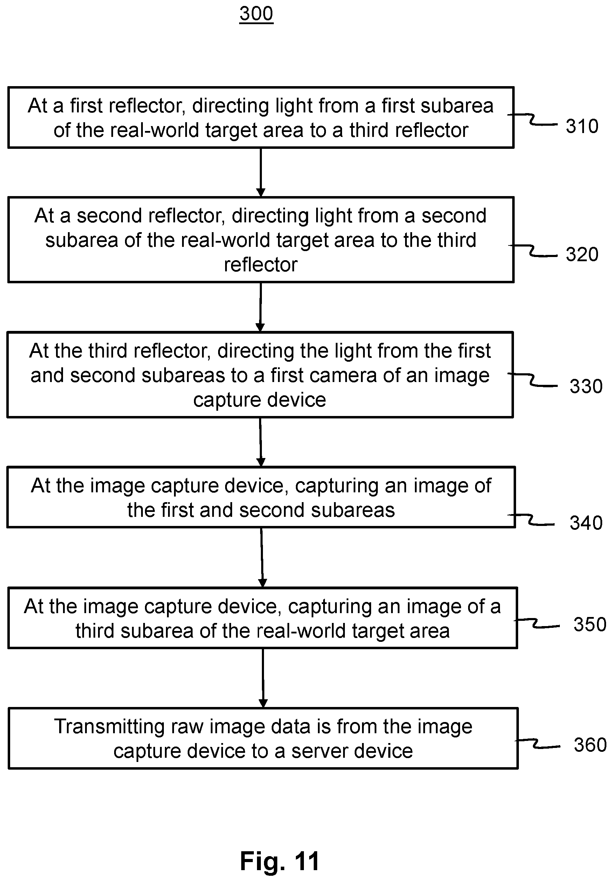

Fig. 11 shows a method 300 for capturing an image of a real-world target area 10. The target area 10 may be divided into first, second and third subareas 10a-c, which make up substantially the entire target area 10. In this instance, the first and second subareas 10a, 10b may be respective peripheral areas of the target area 10, and the third subarea 10c may be a central area of the area 10.

At step 310, light 120 from the first subarea 10a of the target area 10 is directed by a first reflector 80, 80' to a third reflector 100, 100'. At step 320, light 130 from the second subarea 10b of the target area 10 is directed by a second reflector 90, 90' to the third reflector 100, 100'. At step 330, the light 120, 130 from the first and second subareas 10a, 10b is directed by the third reflector 100, 100' to a first camera 110, 110a of an image capture device 20. As discussed above, the position and orientation of the reflectors and the device are determined based on parameters of the image capture device 20 and the target field 10.

At step 340, an image of the first and second subareas 10a, 10b is captured by the image capture device 20. In particular, the image of the first and second subareas 10a, 10b is captured by the first camera 110, 100a of the image capture device 20. The resolution of the captured image may be at least 3,840 x 2160 pixels.

At step 350, an image of a third subarea 10c of the target area subareas is captured by the image capture device 20. The image of the third subarea 10c may be captured directly by the image capture device 20, or via some other reflector arrangement. In some embodiments, the image of the third subarea 10c may be captured by the first camera 110, 110a of the image capture device 20. In other embodiments, the image of the third subarea 10c may be captured by a second camera 110b of the image capture device 20. The resolution of the captured image may be at least 3,840 x 2160 pixels.

At step 360, raw image data may be transmitted from the image capture device 20 to a server device 220, for example via a data network. The server device 220 may provide backend functionality, for example performing the reconstruction and stitching of raw image data into viewable images. The resolution of the resulting image may be at least 7680 x 2160 pixels. Additionally or alternatively, the server device 220 may comprise a memory unit for storing raw image data. Additionally or alternatively, the image capture device 20 may perform the reconstruction and stitching of raw image data into viewable images.

The devices, systems and methods disclosed herein provide a solution that enables wide FOV image capture of a high aspect ratio target area to be performed at sufficiently high resolution in a convenient manner. The entire target area can be captured by a single image capture device without having to move the image capture device to a position distant from the target field or compromising the resolution of the captured image. The image capture device may be a mobile device having camera functionality, which enables image capture to be performed in a portable manner, and allows raw image data to be transmitted via a data network without the need for extra hardware.

Although the present invention has been described above with reference to specific embodiments, it is not intended to be limited to the specific form set forth herein. Rather, the invention is limited only by the accompanying claims and, other embodiments than the specific above are equally possible within the scope of these appended claims.

## Claims

1. A reflector device (60, 60') for use in capturing an image of a real-world target area (10), the reflector device comprising:
a frame (70) configured to retain an image capture device (20) comprising at least a first camera;
a first reflector (80, 80') configured to receive light (120) from a first subarea (10a) of the real-world target area;
a second reflector (90, 90') configured to receive light (130) from a second subarea (10b) of the real-world target area; and
a third reflector (100, 100'); wherein,
the first reflector is configured to direct the light from the first subarea to the third reflector;
the second reflector is configured to direct the light from the second subarea to the third reflector;
the third reflector is configured to direct the light from the first and second subareas to the first camera (110, 110a) of the image capture device such that the first camera is enabled to capture an image of the first and second subareas;
the first, second and third reflectors are planar mirrors; and
the image capture device is enabled to capture an image of a third subarea (10c) of the real-world target area.

2. The reflector device (60, 60') of claim 1, wherein the first reflector (80, 80') is disposed at an angle (α) relative to the second reflector (90, 90'), wherein the angle (α) is optionally determined based on at least one of the focal length of the first camera (110, 110a), the lens distortion of the first camera, the position and/or orientation of the first camera relative to the target area (10), and/or the dimensions of the target area.

3. The reflector device (60, 60') claim 2, wherein the third reflector (100, 100') is disposed perpendicular to a plane bisecting the angle (α) between the first and second reflectors (80, 80', 90, 90').

4. The reflector device (60, 60') of any preceding claim, wherein the first and second reflectors (80, 80', 90, 90') are disposed at an angle (β) relative to a planar field of view (150) of the first camera (110, 110a), wherein the angle (β) is optionally determined based on at least one of the focal length of the first camera, the lens distortion of the first camera, the position and/or orientation of the first camera relative to the target area (10), and/or the dimensions of the target area.

5. The reflector device (60, 60') of any preceding claim, wherein the third reflector (100, 100') is disposed at an angle (θ) relative to a planar field of view (150) of the first camera (110, 110a), wherein the angle (θ) is optionally determined based on at least one of the focal length of the first camera, the lens distortion of the first camera, the position and/or orientation of the first camera relative to the target area (10), and/or the dimensions of the target area.

6. The reflector device (60, 60') of any preceding claim, wherein the image capture device (20) is enabled to capture the image of a third subarea (10c) of the real-world target area (10) directly.

7. The reflector device (60, 60') of any preceding claim, wherein the first, second and third subareas (10a, 10b, 10c) make up substantially the entire real-world target area (10).

8. The reflector device (60, 60') of any preceding claim, wherein the first and second subareas (10a, 10b) represent respective peripheral areas of the real-world target area (10) and the third subarea (10c) represents a central area of the real-world target area.

9. The reflector device (60) of any preceding claim, further configured to enable the first camera (110, 110a) of the image capture device (20) to capture the image of the third subarea (10c) of the real-world target area (10).

10. The reflector device (60') of any of claims 1 to 9, further configured to enable a second camera (110b) of the image capture device (20) to capture the image of the third subarea (10c) of the real-world target area (10).

11. The reflector device (60, 60') of any preceding claim, wherein the images captured by the image capture device (20) are reconstructable to provide an image of the target area (10) having a resolution of at least 7680 x 2160 pixels.

12. The reflector device (60, 60') of any preceding claim, wherein the image capture device (20) is configured to capture video and the reflector device is for use in capturing a video of the real-world target area (10).

13. The reflector device (60, 60') of any preceding claim, wherein the image capture device (20) is a mobile device, such as a smartphone or tablet.

14. A reflector device (60") for use in capturing an image of a real-world target area (10), the reflector device comprising:
a frame (70") configured to retain an image capture device comprising at least one camera (110);
a first reflector (80") configured to receive light (120) from a first subarea (10a) of the real-world target area;
a second reflector (90") configured to receive light (130) from a second subarea (10b) of the real-world target area; and
a third reflector (100"); wherein,
the first reflector is configured to direct the light from the first subarea to the third reflector;
the second reflector is configured to direct the light from the second subarea to the third reflector;
the third reflector is configured to direct the light from the first and second subareas to the at least one camera of the image capture device such that the camera is enabled to capture an image of the first and second subareas with little waste area; and
the first, second and third reflectors are planar mirrors.

15. A system (200) for capturing an image of a real-world target area (10), the system comprising:
a reflector device (60, 60', 60") as defined in any of claims 1 to 14; and
an image capture device (20) comprising at least one camera (110, 110a, 110b).

16. A method (300) for capturing an image of a real-world target area (10), the method comprising:
at a first reflector (80, 80'), directing (310) light (120) from a first subarea (10a) of the real-world target area to a third reflector (100, 100');
at a second reflector (90, 90'), directing (320) light (130) from a second subarea (10b) of the real-world target area to the third reflector;
at the third reflector, directing (330) the light from the first and second subareas to a first camera (110, 110a) of an image capture device (20);
at the image capture device, capturing (340) an image of the first and second subareas and capturing (350) an image of a third subarea (10c) of the real-world target area;
wherein the first, second and third reflectors are planar mirrors.

## Patentansprüche

1. Reflektorvorrichtung (60, 60') zur Verwendung beim Aufnehmen eines Bildes eines realen Zielbereichs (10), wobei die Reflektorvorrichtung aufweist:
eine Halterung (70), die dazu ausgebildet ist, eine Bildaufnahmevorrichtung (20), die zumindest eine erste Kamera aufweist, zu halten;
einen ersten Reflektor (80, 80'), der dazu ausgebildet ist, Licht (120) aus einem ersten Unterbereich (10a) des realen Zielbereichs zu erhalten;
einen zweiten Reflektor (90, 90'), der dazu ausgebildet ist, Licht (130) aus einem zweiten Unterbereich (10b) des realen Zielbereichs zu erhalten; und
einen dritten Reflektor (100, 100'); wobei
der erste Reflektor dazu ausgebildet ist, das Licht aus dem ersten Unterbereich zu dem dritten Reflektor zu leiten;
der zweite Reflektor dazu ausgebildet ist, das Licht aus dem zweiten Unterbereich zu dem dritten Reflektor zu leiten;
der dritte Reflektor dazu ausgebildet ist, das Licht aus den ersten und zweiten Unterbereichen zu der ersten Kamera (110, 110a) der Bildaufnahmevorrichtung zu leiten, so dass der ersten Kamera ermöglicht wird, ein Bild des ersten und zweiten Unterbereichs aufzunehmen;
die ersten, zweiten und dritten Reflektoren ebene Spiegel sind; und
die Bildaufnahmevorrichtung dazu ausgebildet ist, ein Bild eines dritten Unterbereichs (10c) des realen Zielbereichs aufzunehmen.

2. Reflektorvorrichtung (60, 60') nach Anspruch 1, wobei der erste Reflektor (80, 80') in einem Winkel (α) relativ zu dem zweiten Reflektor (90, 90') angeordnet ist, wobei der Winkel (α) wahlweise basierend auf zumindest der Brennweite der ersten Kamera (110, 110a), der Linsenverzerrung der ersten Kamera, der Position und/oder Orientierung der ersten Kamera relativ zu dem Zielbereich (10), und/oder den Dimensionen des Zielbereichs bestimmt ist.

3. Reflektorvorrichtung (60, 60') nach Anspruch 2, wobei der dritte Reflektor (100, 100') senkrecht zu einer Ebene angeordnet ist, die den Winkel (α) zwischen den ersten und zweiten Reflektoren (80, 80', 90, 90') halbiert.

4. Reflektorvorrichtung (60, 60') nach einem der vorstehenden Ansprüche, wobei die ersten und zweiten Reflektoren (80, 80', 90, 90') in einem Winkel (β) relativ zu einem ebenen Sichtfeld (150) der ersten Kamera (110, 110a) angeordnet sind, wobei der Winkel (β) wahlweise basierend auf zumindest der Brennweite der ersten Kamera, der Linsenverzerrung der ersten Kamera, der Position und/oder Orientierung der ersten Kamera relativ zu dem Zielbereich (10), und/oder den Dimensionen des Zielbereichs bestimmt ist.

5. Reflektorvorrichtung (60, 60') nach einem der vorstehenden Ansprüche, wobei der dritte Reflektor (100, 100') in einem Winkel ( θ) relativ zu einem ebenen Sichtfeld (150) der ersten Kamera (110, 110a) angeordnet ist, wobei der Winkel (θ) wahlweise basierend auf zumindest der Brennweite der ersten Kamera, der Linsenverzerrung der ersten Kamera, der Position und/oder Orientierung der ersten Kamera relativ zu dem Zielbereich (10), und/oder den Dimensionen des Zielbereichs bestimmt ist.

6. Reflektorvorrichtung (60, 60') nach einem der vorstehenden Ansprüche, wobei die Bildaufnahmevorrichtung (20) in der Lage ist, das Bild eines dritten Unterbereichs (10c) des realen Zielbereichs (10) direkt aufzunehmen.

7. Reflektorvorrichtung (60, 60') nach einem der vorstehenden Ansprüche, wobei die ersten, zweiten und dritten Unterbereiche (10a, 10b, 10c) im Wesentlichen den gesamten realen Zielbereich (10) bilden.

8. Reflektorvorrichtung (60, 60') nach einem der vorstehenden Ansprüche, wobei der ersten und zweiten Unterbereiche (10a, 10b) jeweilige Randbereiche des realen Zielbereichs (10) darstellen und der dritte Unterbereich (10c) einen Zentralbereich des realen Zielbereichs darstellt.

9. Reflektorvorrichtung (60) nach einem der vorstehenden Ansprüche, ferner dazu ausgebildet, der ersten Kamera (110, 110a) der Bildaufnahmevorrichtung (20) zu ermöglichen, das Bild des dritten Unterbereichs (10c) des realen Zielbereichs (10) aufzunehmen.

10. Reflektorvorrichtung (60') nach einem der Ansprüche 1 bis 9, ferner dazu ausgebildet, einer zweiten Kamera (110b) der Bildaufnahmevorrichtung (20) zu ermöglichen, das Bild des dritten Unterbereichs (10c) des realen Zielbereichs (10) aufzunehmen.

11. Reflektorvorrichtung (60, 60') nach einem der vorstehenden Ansprüche, wobei die von der Bildaufnahmevorrichtung (20) aufgenommenen Bilder rekonstruierbar sind, um ein Bild des Zielbereichs (10) mit einer Auflösung von zumindest 7680 x 2160 Pixeln bereitzustellen.

12. Reflektorvorrichtung (60, 60') nach einem der vorstehenden Ansprüche, wobei die Bildaufnahmevorrichtung (20) dazu ausgebildet ist, Video aufzunehmen, und wobei die Reflektorvorrichtung zur Aufnahme eines Videos des realen Zielbereichs (10) verwendet wird.

13. Reflektorvorrichtung (60, 60') nach einem der vorstehenden Ansprüche, wobei die Bildaufnahmevorrichtung (20) ein Mobilgerät, wie ein Smartphone oder Tablet, ist.

14. Reflektorvorrichtung (60") zur Verwendung beim Aufnehmen eines Bildes eines realen Zielbereichs (10), wobei die Reflektorvorrichtung aufweist:
eine Halterung (70"), die dazu ausgebildet ist, eine Bildaufnahmevorrichtung, die zumindest eine Kamera (110) aufweist, zu halten;
einen ersten Reflektor (80"), der dazu ausgebildet ist, Licht (120) aus einem ersten Unterbereich (10a) des realen Zielbereichs zu erhalten;
einen zweiten Reflektor (90"), der dazu ausgebildet ist, Licht (130) aus einem zweiten Unterbereich (10b) des realen Zielbereichs zu erhalten; und
einen dritten Reflektor (100"); wobei
der erste Reflektor dazu ausgebildet ist, das Licht aus dem ersten Unterbereich zu dem dritten Reflektor zu leiten;
der zweite Reflektor dazu ausgebildet ist, das Licht aus dem zweiten Unterbereich zu dem dritten Reflektor zu leiten;
der dritte Reflektor dazu ausgebildet ist, das Licht aus den ersten und zweiten Unterbereichen zu der zumindest einen Kamera der Bildaufnahmevorrichtung zu leiten, so dass der Kamera ermöglicht wird, ein Bild der ersten und zweiten Unterbereiche mit geringem Verlustbereich aufzunehmen; und
die ersten, zweiten und dritten Reflektoren ebene Spiegel sind.

15. System (200) zum Aufnehmen eines Bildes eines realen Zielbereichs (10), wobei das System aufweist:
eine Reflektorvorrichtung (60, 60', 60") nach einem der Ansprüche 1 bis 14; und
eine Bildaufnahmevorrichtung (20), die zumindest eine Kamera (110, 110a, 110b) aufweist.

16. Verfahren (300) zum Aufnehmen eines Bildes eines realen Zielbereichs (10), wobei das Verfahren aufweist:
an einem ersten Reflektor (80, 80'), Leiten (310) von Licht (120) aus einem ersten Unterbereich (10a) des realen Zielbereichs zu einem dritten Reflektor (100, 100');
an einem zweiten Reflektor (90, 90'), Leiten (320) von Licht (130) aus einem zweiten Unterbereich (10b) des realen Zielbereichs zu dem dritten Reflektor;
an dem dritten Reflektor, Leiten (330) des Lichts aus den ersten und zweiten Unterbereichen zu einer ersten Kamera (110, 110a) einer Bildaufnahmevorrichtung (20);
an der Bildaufnahmevorrichtung, Aufnehmen (340) eines Bildes der ersten und zweiten Unterbereiche und Aufnehmen (350) eines Bildes eines dritten Unterbereichs (10c) des realen Zielbereichs;
wobei der erste, zweite und dritte Reflektor ebene Spiegel sind.

## Revendications

1. Dispositif à réflecteurs (60, 60') pour une utilisation lors de la capture d'une image d'une zone cible (10) du monde réel, le dispositif à réflecteurs comprenant :
un cadre (70) configuré pour retenir un dispositif de capture d'image (20) comprenant au moins une première caméra ;
un premier réflecteur (80, 80') configuré pour recevoir de la lumière (120) à partir d'une première sous-zone (10a) de la zone cible du monde réel ;
un deuxième réflecteur (90, 90') configuré pour recevoir de la lumière (130) à partir d'une deuxième sous-zone (10b) de la zone cible du monde réel ; et
un troisième réflecteur (100, 100') ; dans lequel,
le premier réflecteur est configuré pour diriger la lumière à partir de la première sous-zone jusqu'au troisième réflecteur ;
le deuxième réflecteur est configuré pour diriger la lumière à partir de la deuxième sous-zone jusqu'au troisième réflecteur ;
le troisième réflecteur est configuré pour diriger la lumière à partir des première et deuxième sous-zones jusqu'à la première caméra (110, 110a) du dispositif de capture d'image de telle sorte que la première caméra puisse capturer une image des première et deuxième sous-zones ;
les premier, deuxième et troisième réflecteurs sont des miroirs plans ; et
le dispositif de capture d'image peut capturer une image d'une troisième sous-zone (10c) de la zone cible du monde réel.

2. Dispositif à réflecteurs (60, 60') selon la revendication 1, dans lequel le premier réflecteur (80, 80') est disposé à un angle (α) par rapport au deuxième réflecteur (90, 90'), dans lequel l'angle (α) est déterminé optionnellement sur la base d'au moins une parmi la longueur focale de la première caméra (110, 110a), la distorsion de lentille de la première caméra, la position et/ou l'orientation de la première caméra par rapport à la zone cible (10), et/ou les dimensions de la zone cible.

3. Dispositif à réflecteurs (60, 60') selon la revendication 2, dans lequel le troisième réflecteur (100, 100') est disposé perpendiculairement à un plan divisant en deux parties égales l'angle (α) entre les premier et deuxième réflecteurs (80, 80', 90, 90').

4. Dispositif à réflecteurs (60, 60') selon une quelconque revendication précédente, dans lequel les premier et deuxième réflecteurs (80, 80', 90, 90') sont disposés à un angle (β) par rapport à un champ de vision plan (150) de la première caméra (110, 110a), dans lequel l'angle (β) est déterminé optionnellement sur la base d'au moins une parmi la longueur focale de la première caméra, la distorsion de lentille de la première caméra, la position et/ou l'orientation de la première caméra par rapport à la zone cible (10), et/ou les dimensions de la zone cible.

5. Dispositif à réflecteurs (60, 60') selon une quelconque revendication précédente, dans lequel le troisième réflecteur (100, 100') est disposé à un angle (θ) par rapport à un champ de vision plan (150) de la première caméra (110, 110a), dans lequel l'angle (θ) est déterminé optionnellement sur la base d'au moins une parmi la longueur focale de la première caméra, la distorsion de lentille de la première caméra, la position et/ou l'orientation de la première caméra par rapport à la zone cible (10), et/ou les dimensions de la zone cible.

6. Dispositif à réflecteurs (60, 60') selon une quelconque revendication précédente, dans lequel le dispositif de capture d'image (20) peut capturer l'image d'une troisième sous-zone (10c) de la zone cible (10) du monde réel directement.

7. Dispositif à réflecteurs (60, 60') selon une quelconque revendication précédente, dans lequel les première, deuxième et troisième sous-zones (10a, 10b, 10c) constituent sensiblement la zone cible (10) du monde réel entière.

8. Dispositif à réflecteurs (60, 60') selon une quelconque revendication précédente, dans lequel les première et deuxième sous-zones (10a, 10b) représentent des zones périphériques respectives de la zone cible (10) du monde réel et la troisième sous-zone (10c) représente une zone centrale de la zone cible du monde réel.

9. Dispositif à réflecteurs (60) selon une quelconque revendication précédente, configuré en outre pour permettre à la première caméra (110, 110a) du dispositif de capture d'image (20) de capturer l'image de la troisième sous-zone (10c) de la zone cible (10) du monde réel.

10. Dispositif à réflecteurs (60') selon l'une quelconque des revendications 1 à 9, configuré en outre pour permettre à une seconde caméra (110b) du dispositif de capture d'image (20) de capturer l'image de la troisième sous-zone (10c) de la zone cible (10) du monde réel.

11. Dispositif à réflecteurs (60, 60') selon une quelconque revendication précédente, dans lequel les images capturées par le dispositif de capture d'image (20) peuvent être reconstruites pour fournir une image de la zone cible (10) ayant une résolution d'au moins 7680 × 2160 pixels.

12. Dispositif à réflecteurs (60, 60') selon une quelconque revendication précédente, dans lequel le dispositif de capture d'image (20) est configuré pour capturer de la vidéo et le dispositif à réflecteurs est destiné à être utilisé lors de la capture d'une vidéo de la zone cible (10) du monde réel.

13. Dispositif à réflecteurs (60, 60') selon une quelconque revendication précédente, dans lequel le dispositif de capture d'image (20) est un dispositif mobile, par exemple un smartphone ou une tablette.

14. Dispositif à réflecteurs (60") pour une utilisation lors de la capture d'une image d'une zone cible (10) du monde réel, le dispositif à réflecteurs comprenant :
un cadre (70") configuré pour retenir un dispositif de capture d'image comprenant au moins une caméra (110) ;
un premier réflecteur (80") configuré pour recevoir de la lumière (120) à partir d'une première sous-zone (10a) de la zone cible du monde réel ;
un deuxième réflecteur (90") configuré pour recevoir de la lumière (130) à partir d'une deuxième sous-zone (10b) de la zone cible du monde réel ; et
un troisième réflecteur (100") ; dans lequel,
le premier réflecteur est configuré pour diriger la lumière à partir de la première sous-zone jusqu'au troisième réflecteur ;
le deuxième réflecteur est configuré pour diriger la lumière à partir de la deuxième sous-zone jusqu'au troisième réflecteur ;
le troisième réflecteur est configuré pour diriger la lumière à partir des première et deuxième sous-zones jusqu'à l'au moins une caméra du dispositif de capture d'image de telle sorte que la caméra puisse capturer une image des première et deuxième sous-zones avec peu de déchets ; et
les premier, deuxième et troisième réflecteurs sont des miroirs plans.

15. Système (200) pour capturer une image d'une zone cible (10) du monde réel, le système comprenant :
un dispositif à réflecteurs (60, 60', 60") tel que défini dans l'une quelconque des revendications 1 à 14 ; et
un dispositif de capture d'image (20) comprenant au moins une caméra (110, 110a, 110b).

16. Procédé (300) pour capturer une image d'une zone cible (10) du monde réel, le procédé comprenant :
au niveau d'un premier réflecteur (80, 80'), le fait de diriger (310) de la lumière (120) à partir d'une première sous-zone (10a) de la zone cible du monde réel jusqu'à un troisième réflecteur (100, 100') ;
au niveau d'un deuxième réflecteur (90, 90'), le fait de diriger (320) de la lumière (130) à partir d'une deuxième sous-zone (10b) de la zone cible du monde réel jusqu'au troisième réflecteur ;
au niveau du troisième réflecteur, le fait de diriger (330) la lumière à partir des première et deuxième sous-zones jusqu'à une première caméra (110, 110a) d'un dispositif de capture d'image (20) ;
au niveau du dispositif de capture d'image, la capture (340) d'une image des première et deuxième sous-zones et la capture (350) d'une image d'une troisième sous-zone (10c) de la zone cible du monde réel ;
dans lequel les premier, deuxième et troisième réflecteurs sont des miroirs plans.
